# NEUE EUROPÄISCHE PATENTSCHRIFT

(11) **EP 2 242 672 B2**
(45) Veröffentlichungstag und Bekanntmachung des Hinweises auf die Entscheidung über den Einspruch: **05.10.2022**
(45) Hinweis auf die Patenterteilung: 19.12.2018
(21) Anmeldenummer: 09711308.8
(22) Anmeldetag: 09.02.2009
(51) Int. Cl.: B60T 17/02

(54) **MODULARES BREMSGERÜST**
MODULAR BRAKE DEVICE
BLOC DE FREINAGE MODULAIRE

(30) Priorität: 12.02.2008 DE 102008009217
(43) Veröffentlichungstag der Anmeldung: 27.10.2010
(73) Patentinhaber: Siemens Mobility GmbH, 81739 München (DE)
(72) Erfinder: STOFF, Helmut, 83624 Otterfing (DE)
(86) Internationale Anmeldenummer: PCT/EP2009/051430
(87) Internationale Veröffentlichungsnummer: WO 2009/101042

(56) Entgegenhaltungen:
- WO-A1-2008/025401
- DE-A1- 19 715 528
- DE-A1-102006 010 723
- FR-A- 2 798 345
- KR-A- 19990 074 977
- US-A- 5 025 734
- US-A1- 2004 083 893

## Beschreibung

Die Erfindung betrifft ein Bremsgerüst für ein schienengeführtes Triebfahrzeug mit elektronischen, pneumatischen und mechanischen Komponenten und mit Fahrzeugschnittstellen zum Anschluss des Bremsgerüsts an das Triebfahrzeug.

Ein solches Bremsgerüst, das auch als Druckluftgerüst bezeichnet wird, ist aus dem Stand der Technik bereits bekannt. Vorbekannte Bremsgerüste für Schienenfahrzeuge bestehen in der Regel aus dicht gepackten pneumatischen Komponenten, elektronischen Bauteilen, beispielsweise zur Steuerung der pneumatischen Komponenten sowie aus einem oder mehreren Kompressoren, Trocknern, Filtern, Druckbehältern und dergleichen. Solche Bremsgerüste sind in der Regel nur für einen Lokomotiventyp vereinheitlicht und weisen nur für diesen Lokomotiventyp eine identische Ausrüstung auf. Eine einheitliche Ausgestaltung für unterschiedliche Schienenfahrzeuge ist jedoch nicht immer möglich. So ziehen unterschiedliche Lokomotiventypen in der Regel entsprechend angepasste Bremsgerüste nach sich. Auch unterschiedliche Kundenanforderungen machen ein unterschiedliches Design des Bremsgerüstes erforderlich. Eine grundsätzliche Standardisierung des Bremsgerüstes ist daher von vornherein ausgeschlossen. Dem vorbekannten Bremsgerüst haftet der Nachteil an, dass ein Wechsel einer Komponente eine völlige Neukonstruktion des Bremsgerüstes mit einem entsprechend hohen Engineeringaufwand nach sich ziehen kann.

Die DE 10 2006 010 723 A1 beschreibt eine Kompressoranordnung zum Erzeugen von Druckluft. Die Kompressoranordnung verfügt über einen Antrieb, einen Verdichter, einen Ölvorratsbehälter sowie einen Wärmetauscher. Antrieb und Wärmetauscher sind an einer Antriebsträgerplatte befestigt, während der Ölvorratsbehälter und der Verdichter an einer weiteren Trägerplatte angeordnet sind. Der mit Elektroenergie gespeiste Antrieb 2 erzeugt eine Bewegungsenergie, die über einen Riemenantrieb vom Antrieb auf den Verdichter übertragen wird. Die Antriebsplatte sowie die Trägerplatte können seitlich miteinander verbunden werden. Somit kann der Ölvorratsbehälter und der Verdichter je nach den gestellten Anforderungen oberhalb, unterhalb oder seitlich des Antriebs montiert werden.

Die FR 27 98 345 beschreibt eine pneumatische Komponente für ein Industriefahrzeug, wobei die pneumatische Komponente ebenfalls eine Multifunktionsplatte aufweist.

Die DE 197 15 528 A1 beschreibt eine modular aufgebaute pneumatische Steuereinrichtung für ein Bremsgerüst oder eine Bremstafel.

Die US 5 025 734 A beschreibt ein Bremsgerüst mit den Merkmalen des Oberbegriffes des Patentanspruches 1. Ausgehend hiervon liegt der Erfindung die Aufgabe zugrunde, ein Bremsgerüst bereitzustellen, das leicht und somit kostengünstig an unterschiedliche Anforderungen des Kunden und insbesondere an unterschiedliche Lokomotiven angepasst werden kann.

Die Erfindung löst diese Aufgabe dadurch, dass wenigstens zwei Module aus einer Gruppe von Modulen A, B, C und D miteinander in einer Rücken an Rücken Anordnung kombiniert sind.

Gemäß der vorliegenden Erfindung ist das Bremsgerüst aus vordefinierten Modulen zusammengesetzt. Die Module sind hinsichtlich ihrer räumlichen Bemessung, also mit anderen Worten hinsichtlich ihrer Dimensionierung, vordefiniert. Die Anordnung der Komponenten innerhalb der Module kann erfindungsgemäß variieren. Allerdings weist jedes Modul eine hinsichtlich der räumlichen Lage ebenfalls vordefinierte elektrische oder pneumatische Fahrzeugschnittstelle auf, an der das erfindungsgemäße Bremsgerüst mit dem Schienenfahrzeug, beispielsweise einer Lokomotive, verbunden werden kann. Die Erfindung basiert auf der Erkenntnis, dass der Bauraum innerhalb eines Triebfahrzeugs, beispielsweise einer Lokomotive, sehr begrenzt ist. Nur aufgrund dieses begrenzten Bauraumes ist eine umfangreiche Neuauslegung des Bremsgerüstes erforderlich, wenn eines der Komponenten aufgrund irgendeiner Vorschrift oder sonstigen Grundes ausgetauscht werden muss. Durch die Festlegung von Modulen bestimmter Größe, ist es auf einfache Art und Weise möglich, die Module miteinander zu kombinieren, wobei der Austausch einer Komponente auf das jeweilige Modul, in dem die Komponente vorgesehen ist, begrenzt bleibt. Das erfindungsgemäße Bremsgerüst kann daher einfach, schnell und kostengünstig an beliebige Schienenfahrzeugtopologien angepasst werden. So ist es beispielsweise möglich, das Bremsgerüst von einer elektrischen Lokomotive, die gegebenenfalls lediglich einen einzigen Mittelgang im Maschinenraum aufweist, auf ein Bremsgerüst für eine dieselelektrische Lokomotive umzurüsten, die aufgrund des Dieselmotors zwei Seitengänge rechts und links des Dieselmotors aufweist.

Erfindungsgemäß sind wenigstens zwei Module aus der Gruppe A, B, C und D miteinander kombiniert.

Gemäß einer diesbezüglich zweckmäßigen Weiterentwicklung umfasst das Modul A eine pneumatische Komponenten aufweisende Bremstafel und einen elektronische Komponenten aufweisenden Elektronikschrank. In der Bremstafel sind üblicherweise die pneumatischen Komponenten der pneumatischen Bremse zusammengefasst. So weist die erfindungsgemäße Bremstafel beispielsweise Regelventile, Doppelrückschlagventile, Magnetventile oder dergleichen auf. Der Elektronikschrank beinhaltet hingegen die elektronischen Komponenten zur Steuerung der pneumatischen Komponenten der Bremstafel. So sind in dem Elektronikschrank beispielsweise das Zugsteuergerät (ZSG), Bremssteuergerät (BSG) sowie sonstige Steuer- und Regeleinheiten zum Ansteuern der Regelventile oder dergleichen vorgesehen.

Die Module B und D umfassen zweckmäßigerweise jeweils Druckluftbehälter. Dabei sind die Druckluftbehälter kreiszylindrisch ausgestaltet, beispielsweise mit einem Durchmesser von 500 und/oder 300mm, so dass die Module B und D mit unterschiedlichen Modultiefen bereitgestellt werden können. Die Anzahl der in dem jeweiligen Modul vorgesehenen Druckluftbehälter kann wiederum in Abhängigkeit der jeweiligen Anforderung variieren.

Zweckmäßigerweise umfasst das Modul C einen Kompressor, einen Lufttrockner, einen Luftfilter, einen Kondensatbehälter, einen Mindestdruckventil und/oder einen Hilfskompressor. Statt des Hilfskompressors ist auch eine Hilfsdruckversorgung als Komponente möglich. Die besagten Bauteile oder Komponenten des Bremsgerüstes werden benötigt, um die Umgebungsluft zu komprimieren, zu trocknen und von Verunreinigungen zu befreien und anschließend in den Druckluftbehältern, beispielsweise des Moduls B oder D, zu speichern.

Erfindungsgemäß weisen die Module in einer Stirnansicht eine vorgegebene Breite in Querrichtung, eine vorgegebene Höhe und eine Tiefe auf, die aus einer Gruppe von Rastermaßen ausgewählt ist. Gemäß dieser vorteilhaften Ausgestaltung weisen alle Module die gleiche Breite und die gleiche Höhe auf, wobei die Tiefe unterschiedlich sein kann. Dabei ist jedoch die Tiefe eines Moduls nicht beliebig. Vielmehr ist die Tiefe aus der Gruppe der Rastermaße ausgewählt. So weist das Modul beispielsweise eine Tiefe von 300 mm, 700 mm oder 500 mm auf, so dass durch Kombination eines Moduls mit einer Tiefe von 300 mm, und eines Moduls mit einer Tiefe von 700 mm und eines Moduls mit einer Tiefe von 500 mm eine Gesamttiefe als Summe der Tiefen der drei Module von 1500 mm bereitgestellt ist.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel eines Moduls A des erfindungsgemäßen Bremsgerüstes in einer perspektivischen Darstellung,
- Figur 2: ein Ausführungsbeispiel des Moduls D des erfindungsgemäßen Bremsgerüstes in einer perspektivischen Darstellung,
- Figur 3: ein Ausführungsbeispiel des Moduls C in einer perspektivischen Darstellung,
- Figur 4: ein Ausführungsbeispiel des Moduls B in einer perspektivischen Darstellung,
- Figur 5: ein Ausführungsbeispiel des Moduls A in einer perspektivischen Darstellung, das mit Modulen C und B an seiner Rückseite kombiniert ist,
- Figur 6: die Module C und B gemäß Figur 5 in einer perspektivischen Ansicht,
- Figur 7: eine Variation der Module B und C gemäß Figur 4 in einer perspektivischen Darstellung,
- Figur 8: eine perspektivische Darstellung eines weiteren Ausführungsbeispiels des Moduls B und
- Figur 9: eine schematische Darstellung der Module A, B, C und D in verschiedenen Kombinationen miteinander zeigen.

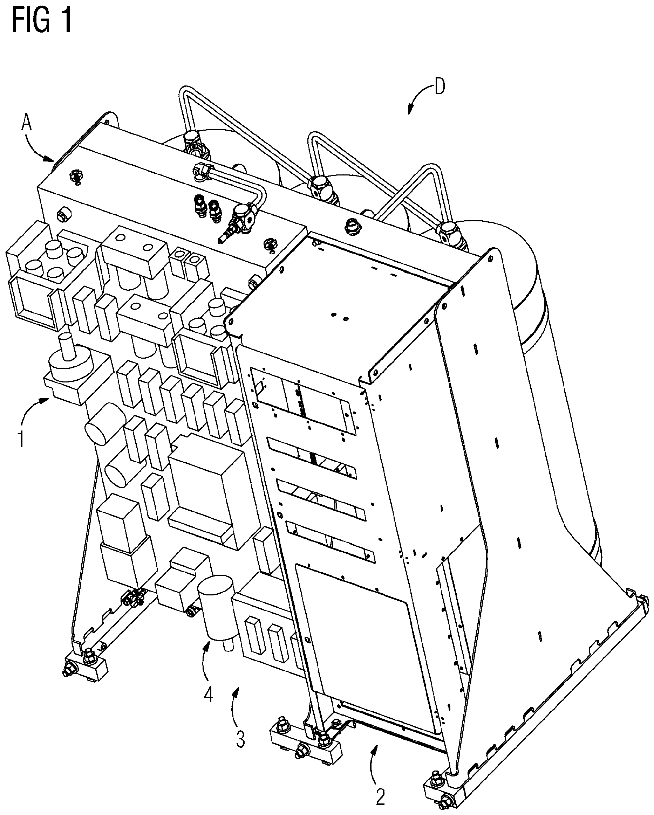

Figur 1 zeigt ein Ausführungsbeispiel der Module A und B in einer perspektivischen Darstellung, wobei das Modul A dem Betrachter zugewandt ist. Es ist erkennbar, dass das Modul A aus einer Bremstafel 1 sowie einem Elektronikschrank 2 besteht. Die Bremstafel 1 umfasst eine Vielzahl von pneumatischen Komponenten, wie Regelventilen, Doppelrückschlagventilen, Druckbegrenzerventilen und dergleichen, deren Anordnung innerhalb des Moduls A beziehungsweise innerhalb der Bremstafel 1 beliebig ist und auf die daher hier nicht genauer eingegangen zu werden braucht. Der Elektronikschrank 2 umfasst hingegen elektronische Komponenten, die zur Ansteuerung der elektrisch ansteuerbaren Ventile in der Bremstafel 1 vorgesehen sind. Darüber hinaus umfasst der Elektronikschrank 2 in dem gezeigten Ausführungsbeispiel das Zugsteuergerät. Zum Anschluss der elektrischen oder elektronischen Komponenten des Elektronikschrankes 2 an das Triebfahrzeug ist eine elektronische Standardschnittstelle 3 vorgesehen, die im unteren Bereich des Moduls B etwa in Mittenlage angeordnet ist. Zum Anschluss der pneumatischen Komponenten der Bremstafel 1 ist eine pneumatische Standardschnittstelle 4 im Modul A vorgesehen. Die Lage der besagten Schnittstellen 3, 4 innerhalb des Moduls ist unabhängig von der sonstigen Ausgestaltung des Moduls und mit anderen Worten somit immer konstant.

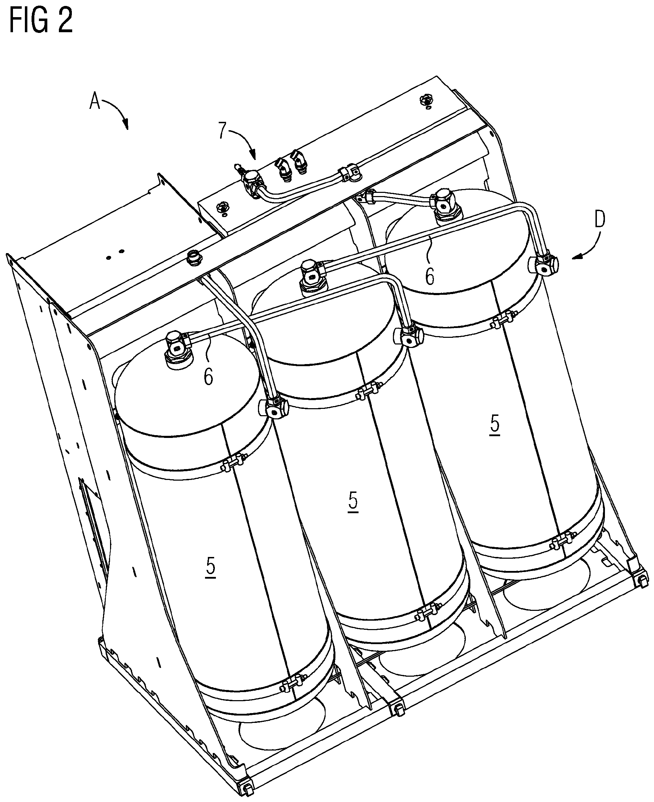

Figur 2 zeigt, wie Figur 1, die Module A und D, wobei jedoch in Figur 2 das Modul D dem Betracht zugewandt ist. Es ist erkennbar, dass das Modul D aus drei Hauptluftbehältern 5 mit jeweils einem Innenvolumen von 250 Litern besteht. Die Hauptluftbehälter 5 sind über Verbindungsleitungen 6 miteinander verbunden, wobei eine Standardschnittstelle 7 zur pneumatischen Verbindung der Hauptluftbehälter 5 mit dem Schienenfahrzeug oder mit anderen Modulen des Bremsgerüstes vorgesehen ist. Die Hauptluftbehälter 5 sind kreiszylindrisch ausgebildet und weisen einen Außendurchmesser von etwa 500 mm auf, so dass das Modul D in etwa ebenfalls eine Tiefe von 500 mm aufweist. Das Modul A an der Rückseite des Moduls D weist eine Tiefe von 500 mm auf, so dass durch die Kombination der Module A und D eine Gesamttiefe von 1000 mm erzielt wird. Im Gegensatz zur Tiefe der Module weisen alle Module die gleiche Höhe und gleiche Breite auf. Zweckmäßigerweise liegt die Breite der Module zwischen 1 und 2 Metern und die Höhe ebenfalls zwischen 1 und 2 Metern.

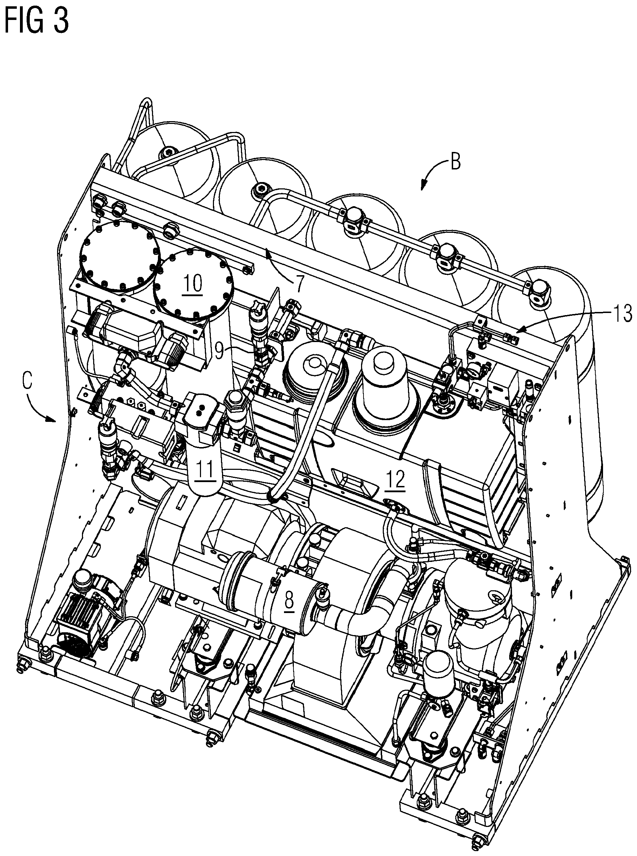

Figur 3 zeigt eine perspektivische Rücken an Rücken Darstellung der Module C und B, wobei das Modul C dem Betrachter zugewandt ist. Das Modul C besteht aus einem Kompressor 8, einem Mindestdruckventil 9, einem Trockner 10, einem Filter 11, einem Kondensatbehälter 12, einer Pantographentafel 13 und weiteren hier nicht abschließend aufgezählten Komponenten. Darüber hinaus ist wieder eine pneumatische Standardschnittstelle vorgesehen, die zur Anbindung weiterer Module B oder D oder aber zur pneumatischen Anbindung des Schienenfahrzeugs dient.

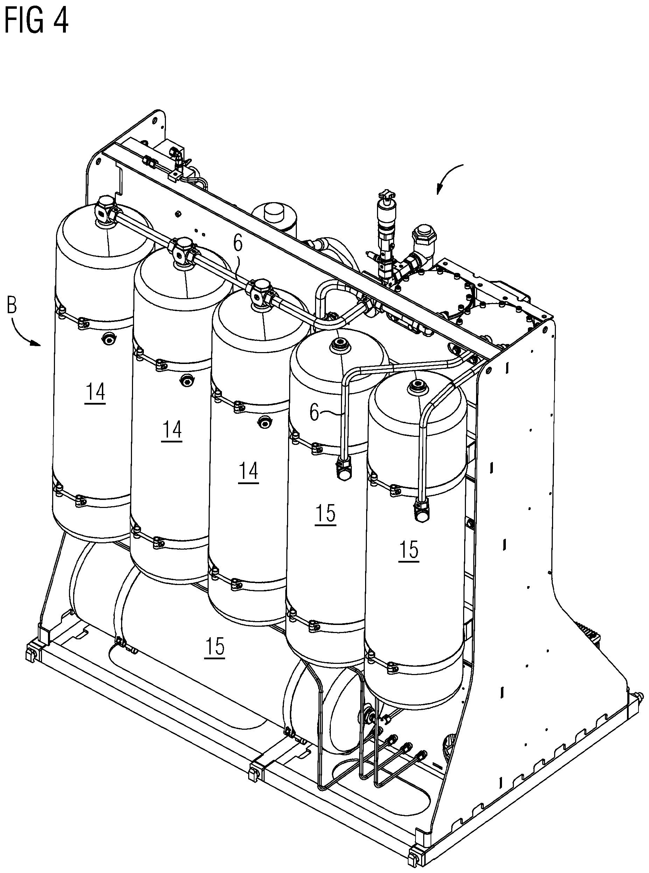

Figur 4 zeigt, wie Figur 3, die Module B und C in einer perspektivischen Darstellung und in einer Rücken an Rücken Anordnung, wobei jedoch im Gegensatz zur Figur 3 das Modul B dem Betrachter zugewandt ist. Es ist erkennbar, dass das Modul B aus drei Hauptluftbehältern 14 und drei Hilfsluftbehältern 15 besteht, die jeweils einen Innenvolumen von 75 Litern aufweisen und kreiszylindrisch ausgebildet sind, wobei die Hohlzylinder der Behälter einen Außendurchmesser von etwa 300 mm aufweisen.

Das Modul B hat somit eine Tiefe von 300 mm, wobei das Modul C eine Tiefe von 700mm aufweist. Zur Verbindung der Hauptluftbehälter und der Hilfsluftbehälter sind wieder Verbindungsrohre 6 vorgesehen. Dabei weisen die Module C und B die gleiche Breite, zweckmäßigerweise zwischen 1 und 2 Metern sowie die gleiche Höhe H, zweckmäßigerweise zwischen 1 bis 2 Metern, auf.

Die in den Figuren 1 bis 4 gezeigten Module sind zum Anordnen auf verschiedenen Seiten eines Mittelganges eines Maschinenraumes einer elektrisch angetriebenen Lokomotive vorgesehen. Rein elektrisch angetriebene Lokomotiven weisen üblicherweise einen Mittelgang auf. Das erfindungsgemäße Bremsgerüst ist durch die modulare Ausgestaltung einfach auf verschiedene Seiten des Mittelganges aufteilbar.

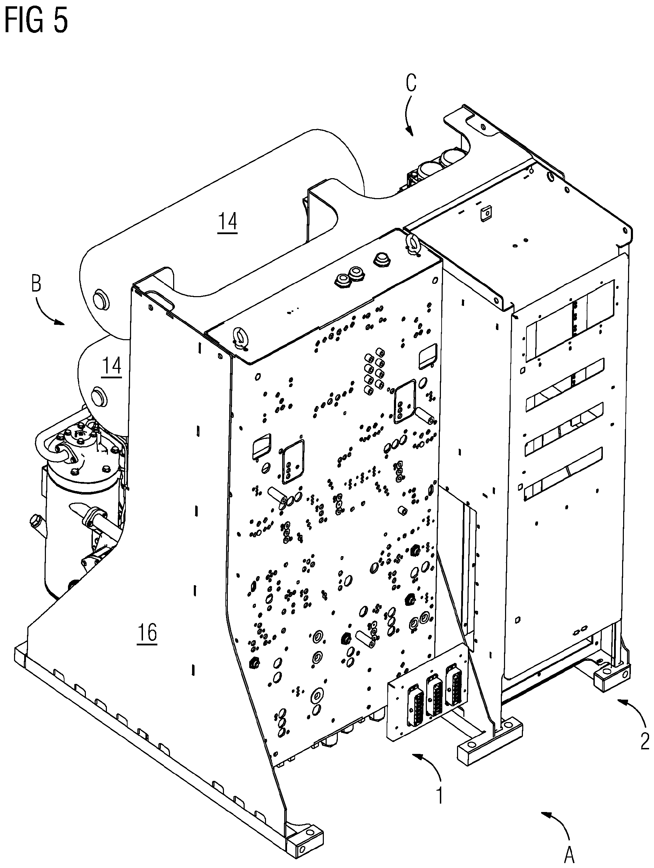

Figur 5 zeigt die Module A, B und C in einer perspektivischen Ansicht, wobei das Modul A dem Betrachter zugewandt ist. Unmittelbar hinter dem Modul A ist das Modul C angeordnet und hinter dem Modul B in die Zeichenebene hinein versetzt das Modul B. Dabei ist ein gemeinsames Haltegerüst 16 zum Halten der jeweiligen Module erkennbar. Die Module A, B und C weisen gemeinsame Bemessungen in Querrichtung sowie in der Höhe auf, wobei jedoch das Modul B lediglich aus zwei Hauptdruckbehältern 14 besteht, die in dem in Figur 5 gezeigten Ausführungsbeispiel sich in horizontaler Richtung erstrecken. Die Tiefe der Module A, B und C beträgt insgesamt 1500 mm, wobei das Modul A eine Tiefe von 500 mm, das Modul C eine Tiefe von 700 mm und das Modul B eine Tiefe von 300 mm aufweisen. Die auf diese Art und Weise zusammengestellten Module A, B und C sind für eine Anordnung in der Mitte des Maschinenraumes einer Lokomotive vorgesehen, bei der es sich um eine dieselelektrisch angetriebene Lokomotive mit zwei Seitengängen handelt. In der Mitte des Maschinenraumes ist ein Dieselmotor zum Antreiben eines Generators angeordnet.

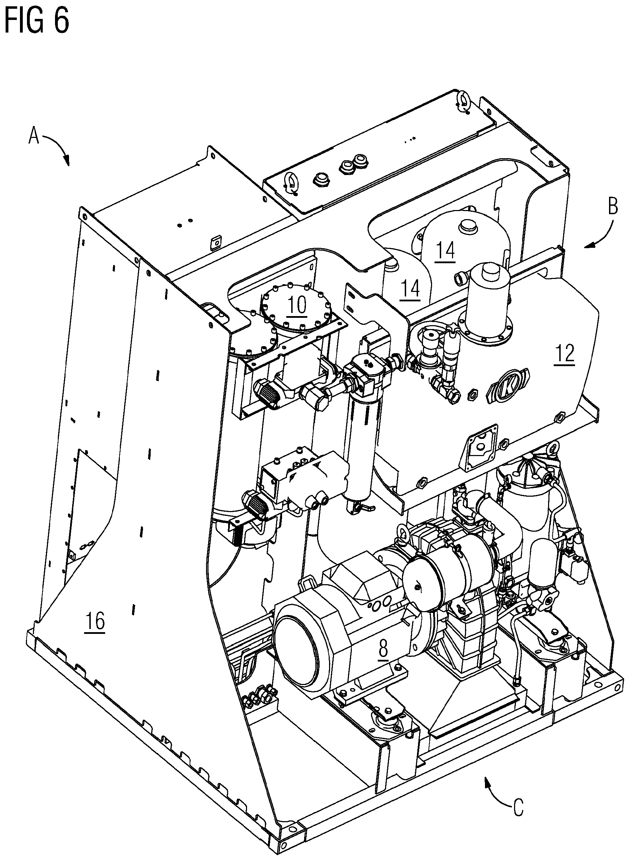

Figur 6 zeigt das Ausführungsbeispiel gemäß Figur 5, wobei jedoch das Modul C dem Betrachter zugewandt ist. Vom Modul B sind lediglich die Hauptdruckbehälter 14 erkennbar, die sich jedoch im Gegensatz zu dem in Figur 5 gezeigten Ausführungsbeispiel in senkrechter Richtung erstrecken. Modul A ist in die Zeichenebene hineinversetzt. Gemäß dem gezeigten Ausführungsbeispiel sind die Module B und C in der Tiefe ineinander verschachtelt. So ist der Trockner 10 des Moduls 10 in der gleichen Tiefe wie die Hauptluftbehälter 14 angeordnet. Eine solche Verschachtelung bietet sich dann an, wenn beispielsweise nicht fünf sondern nur zwei Druckluftbehälter in dem Modul B notwendig sind, so dass im Modul B ausreichend Platz für Komponenten andere Module, hier C, verbleibt. An dieser Stelle sei jedoch noch einmal darauf hingewiesen, dass die in den Figuren dargestellten Komponenten nur beispielhaft aufgeführt sind. Die Module können im Rahmen der Erfindung auch andere hier nicht dargestellte oder benannte Komponenten aufweisen.

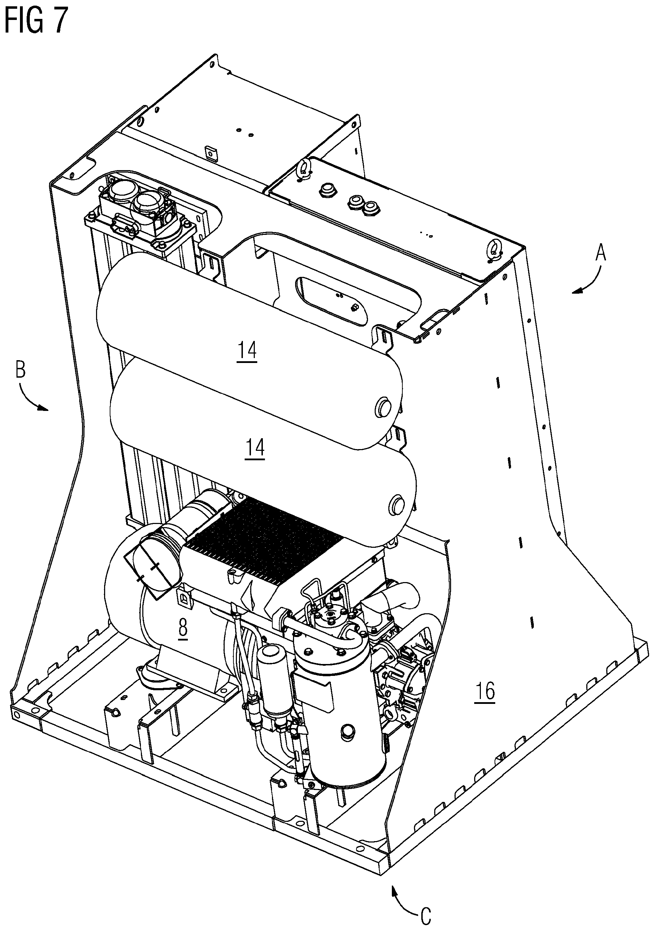

Figur 7 zeigt eine weitere Ausgestaltung einer Kombination der Module A, B und C, wobei das Modul A wieder vom Betrachter abgewandt in die Zeichenebene hineinversetzt ist. Die Module C und B sind in der Tiefe noch mehr als im Ausführungsbeispiel gemäß Figur 6 miteinander verschachtelt. So sind die Hauptluftbehälter 14 des Moduls B im oberen Bereich des gemeinsamen Gerüstes 16 über dem Kompressor 8 des Moduls C angeordnet. Der in Figur 7 nicht sichtbare Kondensatbehälter 12 ist hingegen hinter den Hauptluftbehältern 14 an dem Gerüst 16 montiert. Eine solche in der Tiefe versetzte Schachtelanordnung ist gemäß der vorliegenden Erfindung ebenfalls möglich. Wesentlich im Sinne der Erfindung ist jedoch, dass die Dimensionierung der Bestandteile die Standardbemessungen der Module nicht überschreitet.

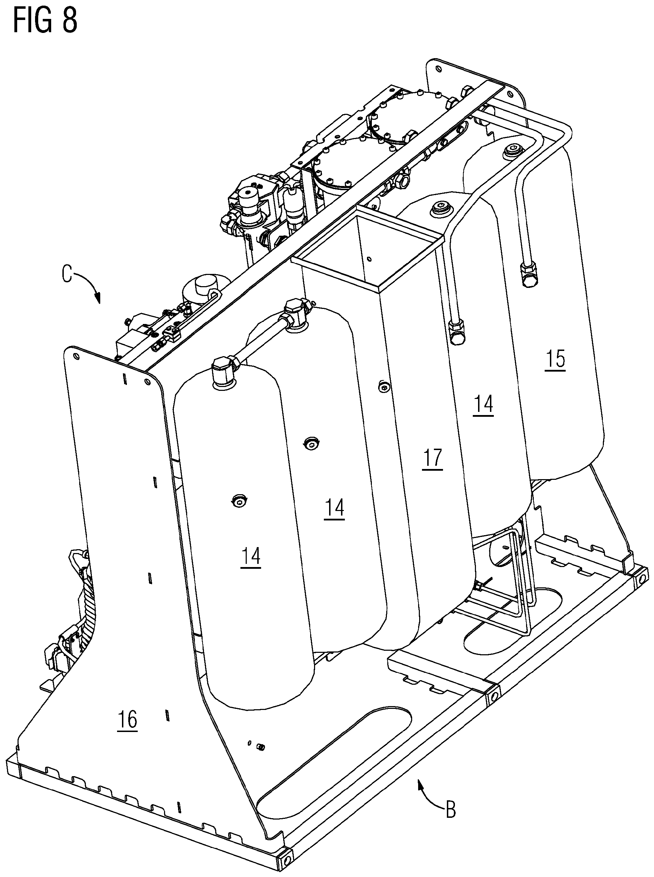

Figur 8 zeigt ein weiteres Ausführungsbeispiel der erfindungsgemäßen Vorrichtung, wobei die beiden Module B und C Rücken an Rücken hintereinander angeordnet sind. Dem Betrachter zugewandt ist das Modul B, das in diesem Ausführungsbeispiel drei senkrechte Hilfsdruckbehälter 14 sowie einen Hauptdruckbehälter 15 aufweist. An der Rückseite und vom Betrachter abgewandt ist das Modul C erkennbar. Im Hinblick auf das in Figur 4 gezeigte Ausführungsbeispiel ist anstelle eines senkrechten Hauptluftbehälters 14 ein Ansaugluftschacht 17 für den Kompressor des Moduls C an dem Gerüst 16 befestigt. Der Ansaugluftschacht ist eine Komponente des Moduls B. Auf einen horizontalen Hilfsluftbehälter 15 wie in Figur 4 wurde jedoch in Figur 8 verzichtet.

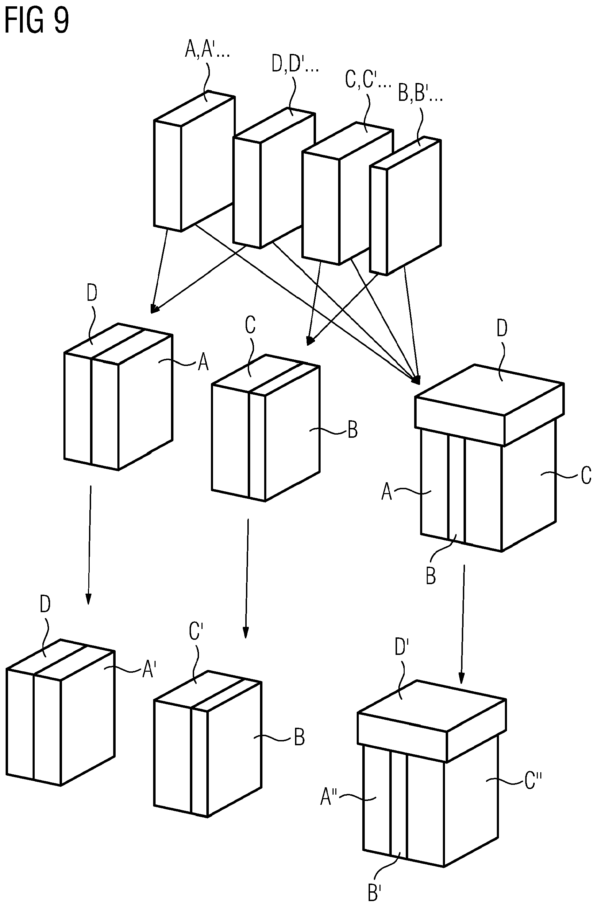

In Figur 9 sind die Kombinationsmöglichkeiten der Module A, B und C beziehungsweise abgewandelter Module A'A", B', C', C" und D' schematisch verdeutlicht. Zunächst sei auf die bereits im Zusammenhang mit Figur 1 dargestellte Kombination der Module A und D hingewiesen und auf die Kombinationsmöglichkeiten der davon leicht abgewandelten Module D' und A'. Es ist erkennbar, dass die Module A und D aber auch A' und D' die gleiche Breiten- als auch Höhenabmessung aufweisen, so dass die erfindungsgemäße passgenaue Rücken an Rücken Anordnung ermöglicht ist. Entsprechendes gilt auch für die Module C, C', B und B', die jeweils die gleiche Bemessung wie die Module A, A', D und D' in Quer- als auch in Höhenrichtung aufweisen. Den Figuren 6 und 7 entsprechend ist in Figur 9 in der rechts dargestellten Säule wieder eine Kombination der Module A, B, C und D verdeutlicht. Allerdings ist in Figur 9 das das Modul D oberhalb der Module A, B und C angeordnet. So ist das Modul D innerhalb des Wagenkastens einer Lokomotive, beispielsweise unter dem Dach des Schienenfahrzeugs, angeordnet. Entsprechendes gilt für die Kombinationen von A', A", B', C', C" und D'.

Der Klarheit halber sei nochmals darauf hingewiesen, dass die einfach oder doppelt gestrichelten Modulreferenzen also beispielsweise A' oder A" für Varianten im Innern des Moduls A stehen. Die Module A, A' und A" weisen daher unterschiedlichen Komponenten auf, sind jedoch in ihrer Breite und Höhe gleich bemessen.

## Patentansprüche

1. Bremsgerüst für ein schienengeführtes Triebfahrzeug mit elektronischen, pneumatischen und mechanischen Komponenten und mit Fahrzeugschnittstellen (3,4) zum Anschluss des Bremsgerüsts an das Triebfahrzeug,
wobei die Komponenten in Modulen untergebracht sind, die jeweils eine vordefinierte räumliche Bemessung aufweisen, wobei jedes Modul wenigstens eine sowohl hinsichtlich ihrer räumlichen Lage innerhalb des Moduls als auch hinsichtlich ihrer Betriebsgröße vordefinierte elektrische oder pneumatische Fahrzeugschnittstelle aufweist und wobei die Module in einer Stirnansicht eine vorgegebene Breite B in Querrichtung, eine vorgegebene Höhe H und eine Tiefe aufweisen, die aus einer Gruppe von Rastermaßen ausgewählt ist,
**dadurch gekennzeichnet, dass**
wenigstens zwei Module aus einer Gruppe von Modulen A, B, C und D miteinander in einer Rücken an Rücken Anordnung kombiniert sind.

2. Bremsgerüst nach Anspruch 1,
**dadurch gekennzeichnet, dass**
das Modul A eine pneumatische Komponenten aufweisende Bremstafel (1) und einen elektronische Komponenten aufweisenden Elektronikschrank (2) umfasst.

3. Bremsgerüst nach Anspruch 1,
**dadurch gekennzeichnet, dass**
die Module B und D jeweils über kreiszylinderförmige Druckluftbehälter (5,14,15) verfügen, die einen Durchmesser von 500 und/oder 300mm aufweisen.

4. Bremsgerüst nach Anspruch 1,
**dadurch gekennzeichnet, dass**
das Modul C einen Kompressor (8), Lufttrockner (10), Luftfilter (11), einen Kondensatbehälter (12), ein Mindestdruckventil und einen Hilfskompressor oder eine Hilfsdruckversorgung aufweist.

5. Bremsgerüst nach Anspruch 1,
**dadurch gekennzeichnet, dass**
die Gruppe von Rastermaßen Rastermaße von 300 mm, 500 mm und 700 mm umfasst.

## Claims

1. Brake device for a rail-guided tractive vehicle having electronic, pneumatic and mechanical components and having vehicle interfaces (3, 4) for connecting the brake device to the tractive vehicle,
wherein the components are accommodated in modules which each have a predefined spatial dimension, wherein each module has at least one electrical or pneumatic vehicle interface which is predefined both in terms of its spatial position within the module and in terms of its operational variable and wherein the modules have, in an end view, a predefined width B in the lateral direction, a predefined height H and a depth which is selected from a group of modular dimensions,
**characterized in that**
at least two modules from a group of modules A, B, C and D are combined with one another in a back-to-back arrangement.

2. Brake device according to Claim 1,
**characterized in that**
the module A comprises a brake panel (1) having pneumatic components and an electronic cabinet (2) having electronic components.

3. Brake device according to Claim 1,
**characterized in that**
modules B and D each have circular-cylinder-shaped compressed air vessels (5, 14, 15) which have a diameter of 500 and/or 300 mm.

4. Brake device according to Claim 1,
**characterized in that**
the module C has a compressor (8), an air dryer (10), air filters (11), a condensate container (12), a minimum pressure valve and an auxiliary compressor or an auxiliary pressure supply.

5. Brake device according to Claim 1,
**characterized in that**
the group of modular dimensions comprises modular dimensions of 300 mm, 500 mm and 700 mm.

## Revendications

1. Structure de freinage pour une motrice ferroviaire comprenant des composants électroniques, pneumatiques et mécaniques et comprenant des interfaces de véhicule (3, 4) destinées au raccordement de la structure de freinage à la motrice, **caractérisée en ce que** les composants sont logés dans des modules qui présentent respectivement une mesure spatiale prédéfinie ; dans laquelle chaque module présente au moins une interface de véhicule électrique ou pneumatique prédéfinie aussi bien en ce qui concerne son emplacement spatial à l'intérieur du module qu'en ce qui concerne sa dimension de fonctionnement et dans lequel les modules présentent, dans une vue frontale, une largeur prédéfinie B en direction transversale, une hauteur prédéfinie H et une profondeur, qui est choisie à partir d'un groupe de dimensions modulaires,
caractérisé en que par au moins deux modules choisis parmi un groupe de A, B, C et D qui sont combinés entre eux à un agencement dos à dos.

2. Structure de freinage selon la revendication 1,
**caractérisée en ce que** le module A comprend un tableau de freinage (1) présentant un composant pneumatique et un coffret électronique (2) présentant un composant électronique.

3. Structure de freinage selon la revendication 1,
**caractérisée en ce que** les modules B et D disposent respectivement de réservoirs d'air comprimé (5, 14, 15) de forme cylindrique circulaire, qui présentent un diamètre de 500 et/ou de 300 mm.

4. Structure de freinage selon la revendication 1,
**caractérisée en ce que** le module C présente un compresseur (8), un dessiccateur d'air (10), un filtre pour l'air (11), un récipient pour le condensat (12), une soupape de pression minimale et un compresseur auxiliaire ou une alimentation de pression auxiliaire.

5. Structure de freinage selon la revendication 1,
**caractérisée en ce que** le groupe de dimensions modulaires comprend des dimensions modulaires de 300 mm, de 500 mm et de 700 mm.
